# EUROPEAN PATENT APPLICATION

(11) **EP 4 287 097 A1**
(43) Date of publication of application: **06.12.2023**
(21) Application number: 22763657.8
(22) Date of filing: 07.03.2022
(51) Int. Cl.: G06Q 30/02, G06Q 40/00, G06V 40/16, G06F 3/14

(54) **REMOTE CONSULTING SERVICE APPARATUS AND METHOD, AND REMOTE CONSULTING SERVICE SYSTEM COMPRISING SAME**

(30) Priority: 05.03.2021 KR 20210029619
(71) Applicant: HYOSUNG TNS INC., Gangnam-gu, Seoul 06349 (KR)
(72) Inventor: LEE, Joo Yong, Seoul 06349 (KR); SEO, Myong Won, Seoul 06349 (KR); SO, Chang Young, Seoul 06349 (KR)
(74) Representative: BCKIP Part mbB
(86) International application number: PCT/KR2022/003217
(87) International publication number: WO 2022/186676

(57) **Abstract**

A remote consulting service apparatus may include: a first image collection unit configured to capture a first image displayed on a screen of a customer terminal; a first display unit on which the first image collected from the first image collection unit is displayed; and a control unit configured to perform control such that information input from a consultant is displayed on the first image displayed on the first display unit. The remote consulting service apparatus may further include a second image collection unit configured to capture a face image of the customer.

## Description

### BACKGROUND

### TECHNICAL FIELD

The present disclosure relates to a remote consulting service system and method capable of non-face-to-face consulting with a customer.

### BACKGROUND ART

In general, due to the continuous development of information and communication technology, financial transactions that have conventionally been made through face-to-face authentication have recently been transferred to non-face-to-face financial transactions using non-face-to-face authentication based on wired communication networks or wireless communication networks, and among the above-mentioned non-face-to-face financial transactions, the amount of financial transactions through Internet banking alone reaches tens of trillions of won per day.

A consultant resides in a bank, but may be absent due to toilet, vacation, or lunch, and accordingly, it is difficult to utilize the seat occupied by the consultant. That is, in the case of the conventional consulting service method, a limited working environment and difficult supply and demand of consulting personnel cause a lot of operating expenses.

Recently, with the development of information and communication technology, the smartphone penetration rate has increased, and many financial institutions have provided customer center services through smartphone applications.

For this reason, even when a customer visits a financial institution and conducts a non-face-to-face consultation with a consultant, there may be a case in which the customer needs to perform a bank transaction using a customer terminal.

However, since the screen displayed on a customer terminal is not provided to the consultant, elderly or infirm customers feel inconvenient in banking.

### SUMMARY

In order to solve the above-described problems, an object of an embodiment of the present disclosure is to provide a remote consulting service apparatus and method for providing convenience to a customer such that a banking service for the customer can be smoothly performed in a case in which a banking service using a customer terminal is required when the customer and a consultant perform non-face-to-face banking.

In accordance with a first aspect of the present disclosure, there is provided a remote consulting service apparatus including: a first image collection unit configured to capture a first image displayed on a screen of a customer terminal; a first display unit on which the first image collected from the first image collection unit is displayed; and a control unit configured to perform control such that information input from a consultant is displayed on the first image displayed on the first display unit.

The remote consulting service apparatus may further include a second image collection unit configured to capture a face image of the customer.

The remote consulting service apparatus may further include a second display unit for displaying a second image in which the consultant is photographed.

The control unit may perform control such that the first image and the second image are simultaneously displayed on any one of the first display unit and the second display unit.

The information input from the consultant may be information input from an input device included in a terminal of the consultant or an external input device of the terminal.

In accordance with a second aspect of the present disclosure, there is provided a remote consulting service method performed by a remote consulting service apparatus, the method including: collecting a first image displayed on a screen of a customer terminal; displaying the first image; and performing control such that information input from a consultant is displayed on the first image.

The remote consulting service method may further include capturing a face image of the customer.

The remote consulting service method may further include displaying a second image in which the consultant is photographed.

The information input from the consultant may be information input from an input device included in a terminal of the consultant or an external input device of the terminal.

In accordance with a third aspect of the present disclosure, there is provided a remote consulting service system including: a banking host server; a consultant terminal connected to the banking host server; a remote consulting service apparatus configured to perform a video connection with the consultant terminal; and a digital desk server configured to receive consultation acceptance information from a consultant based on a customer consultation request upon reception of the customer consultation request from the remote consulting service apparatus, wherein the remote consulting service apparatus includes: a first image collection unit configured to capture a first image displayed on a screen of a customer terminal; a first display unit on which the first image collected from the first image collection unit is displayed; and a control unit configured to perform control such that information input from the consultant is displayed on the first image displayed on the first display unit.

The remote consulting service apparatus may further include a second image collection unit configured to capture a face image of the customer.

The remote consulting service apparatus may further include a second display unit for displaying a second image in which the consultant is photographed.

The control unit may perform control such that the first image and the second image are simultaneously displayed on any one of the first display unit and the second display unit.

The information input from the consultant may be information input from an input device included in the consultant terminal or an external input device of the consultant terminal.

According to an embodiment of the present disclosure, it is possible to efficiently perform a banking service through a customer terminal by providing a screen image of the customer terminal to a consultant.

Furthermore, according to an embodiment of the present disclosure, a customer can effectively operate a customer terminal according to information displayed by a consultant by displaying and guiding banking operations to be performed through the customer terminal on the screen.

### BRIEF DESCRIPTION OF THE DRAWINGS

FIG. 1 is a block diagram showing a remote consulting service apparatus according to a first embodiment of the present disclosure.
FIG. 2 is a diagram showing a configuration of the remote consulting service apparatus according to the first embodiment of the present disclosure.
FIGs. 3 and 4 are diagrams showing various positions of a first image collection unit in the remote consulting service apparatus according to the first embodiment of the present disclosure.
FIGs. 5 and 6 are diagrams showing images displayed on a display unit.
FIG. 7 is a flowchart showing a remote consulting service method according to the first embodiment of the present disclosure.
FIG. 8 is a block diagram showing a remote consulting service system including the remote consulting service apparatus according to the first embodiment of the present disclosure.
FIG. 9 is a block diagram showing a remote consulting apparatus according to a second embodiment of the present disclosure.
FIG. 10 is a block diagram showing a configuration of a control unit of the remote consulting service apparatus according to the second embodiment of the present disclosure.

### DESCRIPTION OF EXEMPLARY EMBODIMENTS

Hereinafter, a configuration and operation according to an embodiment of the present disclosure will be described in detail with reference to the accompanying drawings. The following description is one of many claimable aspects of the disclosure and may form part of the detailed description of the disclosure. However, in describing the present disclosure, detailed descriptions of known configurations or functions may be omitted to clarify the present disclosure.

The present disclosure may make various changes and include various embodiments, and specific embodiments will be illustrated in the drawings and described in the detailed description. However, the present disclosure is not limited to a specific embodiment, and it should be understood that the present disclosure includes all changes, equivalents, or substitutes included in the spirit and scope thereof.

Terms including ordinal numbers, such as first and second, may be used for describing various elements, but the corresponding elements are not limited by these terms. These terms are only used for the purpose of distinguishing one element from another element. The terms used in the present disclosure are only used for describing specific embodiments, and are not intended to limit the present disclosure. Singular expressions include plural expressions unless the context clearly indicates otherwise.

Hereinafter, preferred embodiments of the present disclosure will be described in detail based on the accompanying drawings.

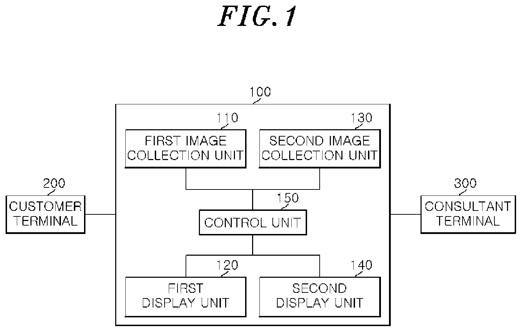

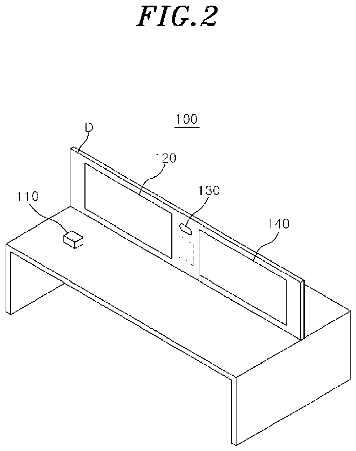

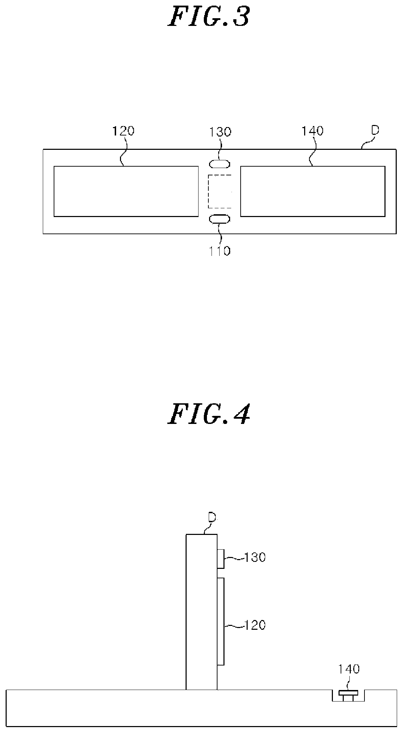

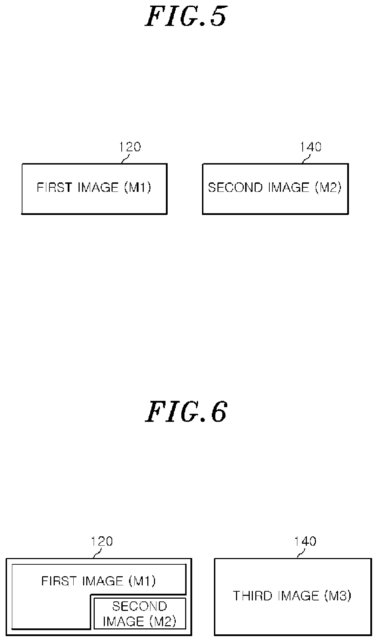

FIG. 1 is a block diagram showing a remote consulting service apparatus according to a first embodiment of the present disclosure, FIG. 2 is a diagram showing a configuration of the remote consulting service apparatus according to the first embodiment of the present disclosure, FIGs. 3 and 4 are diagrams showing various positions of a first image collection unit in the remote consulting service apparatus according to the first embodiment of the present disclosure, and FIGs. 5 and 6 are diagrams showing images displayed on a display unit.

Referring to FIGs. 1 and 2, the remote consulting service apparatus 100 according to the first embodiment of the present disclosure may include a first image collection unit 110, a first display unit 120, and a second image collection unit. 130, a second display unit 140, and a control unit 150. Here, the remote consulting service apparatus 100 may be, for example, a digital desk device, but the present disclosure is not limited thereto.

The first image collection unit 110 may collect a first image displayed on a screen of a customer terminal 200. The first image collection unit 110 may include a camera or a CCD image sensor for capturing a screen displayed on the customer terminal 200, but the present disclosure is not limited thereto. The first image may include a screen for performing banking and may be a screen for an application provided by a bank.

The first image collection unit 110 may be provided on a lower plate of a desk D and may be formed at a distance within reach of a customer. When a customer brings the customer terminal 200 close to the first image collection unit 110, the first image collection unit 110 may collect a first image of a screen displayed on the customer terminal 200. Here, the customer terminal 200 may be a terminal carried by a customer visiting a financial institution, and may include terminals such as a mobile phone, a tablet, and a laptop computer. The first image collection unit 110 may have a close-up function to capture a small-sized screen displayed on the customer terminal 200.

Although the first image collection unit 110 is provided on the lower plate of the desk D in the above description, the location thereof is not limited.

For example, as shown in FIG. 3, the first image collection unit 110 may be provided on the upper plate of the desk D and may be installed in a lower area of the upper plate of the desk D, which is within reach of a customer.

Alternatively, as shown in FIG. 4, the first image collection unit 110 may be provided on the lower plate of the desk D, and in order to prevent the first image collection unit 110 from being lost or damaged, a recess may be formed on the lower plate of the desk D and the first image collection unit 110 may be disposed in the recess to be fixed thereto. In this case, a lens of the first image collection unit 110 may be disposed to face the top of the desk D.

When a customer directs the screen of the customer terminal 200 toward the lens of the first image collection unit 110, the first image collection unit 110 can effectively capture the screen of the customer terminal 200.

Referring back to FIGs. 1 and 2, the first display unit 120 may display the first image collected by the first image collection unit 110. The first display unit 120 may display the first image under the control of the control unit 150. The first display unit 120 may include a monitor or a transparent display, but the present disclosure is not limited thereto.

The first display unit 120 may be provided on the top plate of the desk D and may be formed in a circular or polygonal shape. The first display unit 120 may be disposed to face the customer and display the first image to the customer.

The second image collection unit 130 may capture images of the body of a customer. The second image collection unit 130 may collect a face image from among body images of the customer. The second image collecting unit 130 may include a camera or an image sensor, but the present disclosure is not limited thereto. A second image collected by the second image collection unit 130 may be transmitted to a consultant terminal 300 according to the control unit 150.

The second image collection unit 130 may be provided on the upper plate of the desk D and may be installed, for example, in the central area of the upper plate of the desk D. Here, a lens of the second image collecting unit 130 may be provided to face the customer.

The second display unit 140 may display a second image that is a face image of a consultant. The second image, which is a face image of the consultant, may be received from the consultant terminal 300, and the control unit 150 may perform control such that the received second image is displayed on the second display unit 140.

The second display unit 140 may be provided on the top plate of the desk D and may be installed at a distance from one side of the first display unit 120. The second display unit 140 may be disposed to face the customer and display the second image to the customer.

The control unit 150 may perform control such that the first image collected by the first image collection unit 110 is displayed on the first display unit 120. The control unit 150 may transmit the first image collected by the first image collection unit 110 to the consultant terminal 300. The consultant can check the first image through the consultant terminal 300.

In addition, the control unit 150 may perform control such that an image of the customer collected by the second image collection unit 130 is transmitted to the consultant terminal 300. The control unit 150 may perform control such that the second image collected from the consultant terminal 300 is displayed on the second display unit 140.

As shown in FIG. 5, the control unit 150 may perform control such that the first image M1 is displayed on the first display unit 120 and the second image M2 is displayed on the second display unit 140. Accordingly, the consultant displayed on the second display unit 140 can guide the customer through banking operations while viewing the first image M1 that is a screen image of the customer terminal.

Alternatively, as shown in FIG. 6, the control unit 150 may perform control such that the first image M1 and the second image M2 are simultaneously displayed on the first display unit 120. The first image M1 may be set to be larger than the second image M2, which can effectively deliver guidance on banking to customers.

In addition, the control unit 150 may perform control such that the screen of the second display unit 140 is not displayed or, if necessary, a third image M3 representing another consultant is displayed on the second display unit 140 in order to assist the current operation.

Referring back to FIGs. 1 and 2, the control unit 150 may perform control such that information input from the consultant is displayed on the first image displayed on the first display unit 120. For example, if the consultant displays information using text or lines on the first image, the control unit 150 may receive the information and control the first display unit 120 such that the first display unit 120 displays the information input from the consultant. Here, the information input by the consultant may be information input using an input device included in the consultant terminal or information input using an external input device such as a separate touch pen.

Therefore, the consultant can sequentially guide the customer through the customer terminal on banking to be performed, and the customer can effectively perform banking by operating the customer terminal according to the information displayed by the consultant.

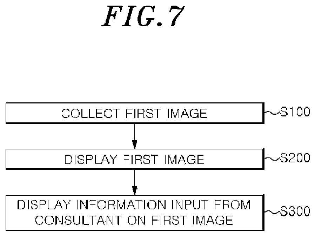

FIG. 7 is a flowchart showing a remote consulting service method according to the first embodiment of the present disclosure.

Referring to FIG. 7, the remote consulting service method according to the first embodiment of the present disclosure may include a step S 100 of collecting a first image, a step S200 of displaying the first image, and a step S300 of performing control such that information input from a consultant is displayed on the first image. Here, the remote consulting service method may be performed by the remote consulting service apparatus.

The step S100 of collecting the first image may be performed by the first image collection unit 110.

In the step S 100 of collecting the first image, the first image that is the screen of the customer terminal may be collected. The first image may include a screen for performing banking and may be a screen for an application provided by a bank.

The step S200 of displaying the first image may be performed on the first display unit 120.

In the step S200 of displaying the first image, the first image collected by the first image collection unit 110 may be displayed.

The step S300 of performing control such that information input from the consultant is displayed on the first image may be performed by the control unit.

In the step S300 of performing control such that the information input from the consultant is displayed on the first image, in a case in which the consultant displays information on the first image using text or lines, the control unit receives the information and control the first display unit 120 such that the first display unit 120 displays the information input from the consultant.

The remote consulting service method according to the first embodiment of the present disclosure may further include a step of capturing a face image of a customer. The step of capturing a face image of a customer may be performed by the second image collection unit 130. The face image of the customer collected in the step of capturing a face image of a customer may be provided to the consultant terminal.

The remote consulting service method according to the first embodiment of the present disclosure may further include a step of displaying a second image of a consultant. The step of displaying the second image of the consultant may be performed by the second display unit 140. The second image of the consultant may be received from the consultant terminal.

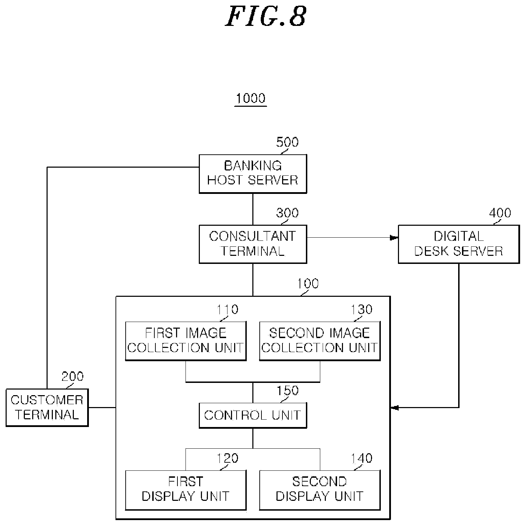

FIG. 8 is a block diagram showing a remote consulting service system including the remote consulting service apparatus according to the first embodiment.

Referring to FIG. 8, the remote consulting service system 1000 may include a banking host server 500, the consultant terminal 300, the remote consulting service apparatus 100, and a digital desk server 400. Here, since the configuration of the remote consulting service apparatus 100 is the same as that of FIG. 1, a detailed description thereof will be omitted.

The banking host server 500 may be a server installed in a financial institution. The banking host server 500 may perform data storage and business processing for performing financial services.

The banking host server 500 may perform a consultation reservation using information provided through the customer terminal 200.

The consultant terminal 300 may be connected to the banking host server 500. The consultant terminal 300 may perform communication related to financial services from the banking host server 500 under the control of the consultant.

The consultant terminal 300 may be connected to the remote consulting service apparatus 100 and the digital desk server 400. The consultant terminal 300 may request identification of a customer and customer data from the remote consulting service apparatus 100 and transmit received data to the banking host server 500.

Upon reception of a customer consultation request from the remote consulting service apparatus 100, the digital desk server 400 may connect a consultant who will handle a service type suitable for customer consultation based on content of customer consultation.

In a case in which a non-face-to-face consultation with a customer is conducted and thus banking through the customer terminal 200 is required, the remote consulting service apparatus 100 captures the first image displayed on the screen of the customer terminal 200, displays the first image on the first display unit 120, and performs control such that information input from the consultant is displayed on the first image to effectively guide banking through the customer terminal 200.

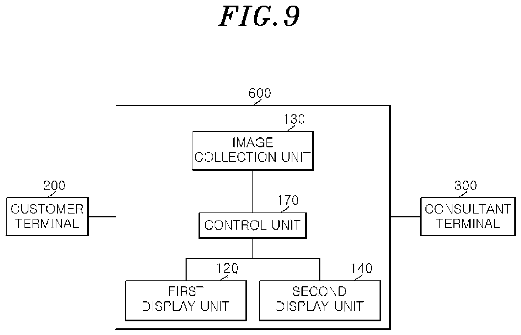

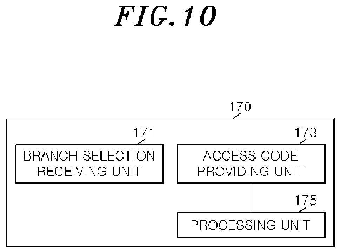

FIG. 9 is a block diagram showing a remote consulting service apparatus according to a second embodiment of the present disclosure, and FIG. 10 is a block diagram showing a configuration of a control unit of the remote consulting service apparatus according to the second embodiment of the present disclosure.

Referring to FIG. 9, the remote consulting service apparatus 600 according to the second embodiment of the present disclosure may include an image collection unit 130, a first display unit 120, a second display unit 140, and a control unit 170.

The image collection unit 130 may capture images of the body of a customer. The image collection unit 130 may collect a face image from among body images of the customer. The image collection unit 130 may include a camera or an image sensor, but the present disclosure is not limited thereto. A second image, which is a face image of the customer collected by the image collection unit 130, may be transmitted to the consultant terminal 300 according to the control unit 170.

The first display unit 120 may display a first image that is the screen of the customer terminal 200. The first display unit 120 may display the first image collected under the control of the control unit 170. The first display unit 120 may include a monitor or a transparent display, but the present disclosure is not limited thereto.

The second display unit 140 may display a second image that is a face image of a consultant. The second image, which is an image of the consultant, may be received from the consultant terminal 300, and the control unit 170 may perform control such that the received second image is displayed on the second display unit 140.

The control unit 170 may perform control such that the first image that is the screen of the customer terminal 200 is displayed on the first display unit 120.

As shown in FIG. 10, the control unit 170 may include a branch selection receiving unit 171, an access code providing unit 173, and a processing unit 175.

When a customer selects a bank branch through the customer terminal 200, the branch selection receiving unit 171 may receive a selected branch selection signal.

The access code providing unit 173 may provide access code to the customer terminal 200. The access code may be security code for accessing the customer terminal 200.

When the customer inputs the access code through the customer terminal 200, the processing unit 175 may bring the first image that the screen of the customer terminal 200 and display the first image on the first display unit 120.

The remote consulting service apparatus according to the second embodiment has an effect of receiving a screen of a customer terminal without a separate camera.

Various embodiments of the present disclosure may be implemented by software (e.g., program) including instructions stored in storage media (e.g., memory (internal memory or external memory)) readable by a machine (e.g., computer). The machine is a device capable of calling a stored command from a storage medium and operating according to the called command, and may include an electronic device according to the disclosed embodiments. When the command is executed by a control unit, the control unit may perform a function corresponding to the command directly or by using other components under the control of the control unit. An instruction may include code generated or executed by a compiler or an interpreter. A machine-readable storage medium may be provided in the form of a non-transitory storage medium. Here, non-transitory means that a storage medium does not contain a signal and is tangible, but does not distinguish whether data is stored semi-permanently or temporarily in the storage medium.

According to the embodiment, a method according to various embodiments disclosed in this document may be included in a computer program product and provided.

According to one embodiment, a computer-readable recording medium storing a computer program may include instructions for causing a processor to perform a method including a step of collecting a first image displayed on a screen of a customer terminal, a step of displaying the first image, and a step of performing control such that information input from a consultant is displayed on the first image.

According to one embodiment, a computer program stored in a computer-readable recording medium may include instructions for causing a processor to perform a method including a step of collecting a first image displayed on a screen of a customer terminal, a step of displaying the first image, and a step of performing control such that information input from a consultant is displayed on the first image.

Although the above has been described with reference to drawings and embodiments, it is understood that those skilled in the art can modify and change the embodiments in various ways without departing from the technical spirit of the embodiments described in the claims below.

## Claims

1. A remote consulting service apparatus comprising:
a first image collection unit configured to capture a first image displayed on a screen of a customer terminal;
a first display unit on which the first image collected from the first image collection unit is displayed; and
a control unit configured to perform control such that information input from a consultant is displayed on the first image displayed on the first display unit.

2. The remote consulting service apparatus of claim 1, further comprising:
a second image collection unit configured to capture a face image of the customer.

3. The remote consulting service apparatus of claim 1, further comprising:
a second display unit for displaying a second image in which the consultant is photographed.

4. The remote consulting service apparatus of claim 3, wherein the control unit performs control such that the first image and the second image are simultaneously displayed on any one of the first display unit and the second display unit.

5. The remote consulting service apparatus of claim 1, wherein the information input from the consultant is information input from an input device included in a terminal of the consultant or an external input device of the terminal.

6. A remote consulting service method performed by a remote consulting service apparatus, the method comprising:
collecting a first image displayed on a screen of a customer terminal;
displaying the first image; and
performing control such that information input from a consultant is displayed on the first image.

7. The remote consulting service method of claim 6, further comprising capturing a face image of the customer.

8. The remote consulting service method of claim 6, further comprising displaying a second image in which the consultant is photographed.

9. The remote consulting service method of claim 6, wherein the information input from the consultant is information input from an input device included in a terminal of the consultant or an external input device of the terminal.

10. A remote consulting service system comprising:
a banking host server;
a consultant terminal connected to the banking host server;
a remote consulting service apparatus configured to perform a video connection with the consultant terminal; and
a digital desk server configured to receive consultation acceptance information from a consultant based on a customer consultation request upon reception of the customer consultation request from the remote consulting service apparatus,
wherein the remote consulting service apparatus includes:
a first image collection unit configured to capture a first image displayed on a screen of a customer terminal;
a first display unit on which the first image collected from the first image collection unit is displayed; and
a control unit configured to perform control such that information input from the consultant is displayed on the first image displayed on the first display unit.

11. The remote consulting service system of claim 10, wherein the remote consulting service apparatus further includes a second image collection unit configured to capture a face image of the customer.

12. The remote consulting service system of claim 10, wherein the remote consulting service apparatus further comprises a second display unit for displaying a second image in which the consultant is photographed.

13. The remote consulting service system of claim 12, wherein the control unit performs control such that the first image and the second image are simultaneously displayed on any one of the first display unit and the second display unit.

14. The remote consulting service system of claim 10, wherein the information input from the consultant is information input from an input device included in the consultant terminal or an external input device of the consultant terminal.
